# EUROPEAN PATENT SPECIFICATION

(11) **EP 1 565 371 B1**
(45) Date of publication and mention of the grant of the patent: **04.07.2007**
(21) Application number: 03776084.0
(22) Date of filing: 20.11.2003
(51) Int. Cl.: B62K 15/00, B62K 5/04

(54) **MEANS OF PERSONAL TRANSPORT**
PERSONENTRANSPORTMITTEL
MOYEN DE TRANSPORT PERSONNEL

(30) Priority: 21.11.2002 NO 20025584
(43) Date of publication of application: 24.08.2005
(73) Proprietor: Peter Opsvik A.S., 0164 Oslo (NO)
(72) Inventor: OPSVIK, Peter, N-0258 Oslo (NO)
(74) Representative: Valkeiskangas, Tapio Lassi Paavali
(86) International application number: PCT/NO2003/000389
(87) International publication number: WO 2004/045943

(56) References cited:
- EP-A2- 1 213 214
- WO-A1-02/45539
- WO-A2-98/46474
- US-A- 3 434 558
- US-B1- 6 220 612

## Description

### Technical field

The present invention relates to vehicles comprising three wheels designed as a scooter which may be transformed into a compact and trolley-like compartment unit.

### Background art

The scooters of prior art are generally not well adapted to situations where conventional use (propulsion by kicking) is not acceptable or impossible. Accordingly, the need for transportation of goods which often accompanies personal transportation is not often in focus.

The invention relates to a technical solution where a vehicle for personal transport (corresponding to a traditional scooter) may be transformed into a compact and trolley-like compartment unit (corresponding to a traditional suitcase with wheels) which may be handled and is acceptable outside the intended field of application for a scooter.

The traditional scooter must often be carried in situations where it can not be used, e.g. during travel by public transport. This will in spite of a compact design be impractical.

In the embodiment disclosed in the present application, the vehicle comprises three wheels, which makes it possible for a stable ride at low velocity. Corresponding two-wheeled scooters will be more unstable at low velocity.

Several examples of collapsible, wheeled devices are known. One example of a collapsible, wheeled device according to the preamble of claim 1 is disclosed in US 3,434,558. The device is collapsible in that a pair of wheels of the said device can be pushed towards a third wheel guided by a stabilizing sway bar. The device is collapsed by use of both hands, and the design of the stabilizing sway and the platform makes it difficult to transport this vehicle in a collapsed position.

EP 1213214A2 discloses a collapsible tricycle of which the framework mainly comprises tubes. Furthermore, the scooter is folded together with a folding mechanism disposed between the different tube members. The folding mechanisms are relatively complex constructions which comprise several small parts.

US 6220612 also disclose a foldable tricycle. This tricycle is folded together by lowering the front part via a joint located at the connection between the rear and the front part of the cycle, leaving the tricycle in a collapsed position with all parts in substantially one plane with the front and the rear wheels at each end.

DE 3537522 A1 discloses a scooter where the steering rod may be folded down onto the main part comprising a platform and wheels.

A foldable tricycle is also disclosed in DE 3138095 A1. Said tricycle comprises three wheels and may be folded together and transported on the wheels in a collapsed position. The described design requires that the platform is divided and can be folded. The folding of the tricycle is done using both hands. Further the tricycle is free to roll on the wheels in a folded position which is a disadvantage when the device is left unattended on a sidewalk or the like.

### Brief description of the invention

An object of the present invention is to provide a scooter comprising three wheels which can be folded using one hand only.

A second object of the invention is to provide a scooter which can be carried or wheeled in a folded position like a wheeled suitcase. Compartment units may be attached to the handlebar construction as to make the scooter work like a wheeled suitcase.

A third object of the invention is to provide a scooter which may be left unattended without the risk of the folded scooter moving unintentionally.

A further object of the invention is to provide a scooter which has a rigid platform construction.

Yet another object of the invention is to provide a scooter which accommodates motorized propulsion.

The invention may function as a hybrid, hence, as a compartment unit (briefcase, suitcase, shopping bag, etc.) and/or a means of transportation in one compact and manageable unit, which will be just as acceptable to bring indoors as a wheeled briefcase.

The objects of the invention are accomplished by a scooter comprising a support device for a steerable front wheel, and a rear carriage which is connected to the support device at the front of the carriage, which carriage is provided with at least one wheel at the rear, the carriage may be folded against the support device forming a compact unit which may be carried or rolled, wherein in a utilizing position, the front of said carriage rests against a stop face connected to the support device, and a rigid stay which is pivotally connected at its first end to a mid-section of the carriage and is pivotally connected at its second end to the support device; when the scooter is collapsed, the carriage will pivot around the first end of the stay, and the rear wheel or wheels is swung towards the front wheel, as claimed in the appended claim 1. Further advantageous embodiments of the invention will appear from the following dependent claims.

### Brief description of the drawings

A preferred embodiment of the present invention is described in detail with reference to the enclosed drawings, where;
Figure 1 is a perspective view of a scooter according to the invention mounted in a position for personal transportation,
Figure 2 is a perspective view of a rigid stay which is pivotally connected to the rear carriage and the support device,

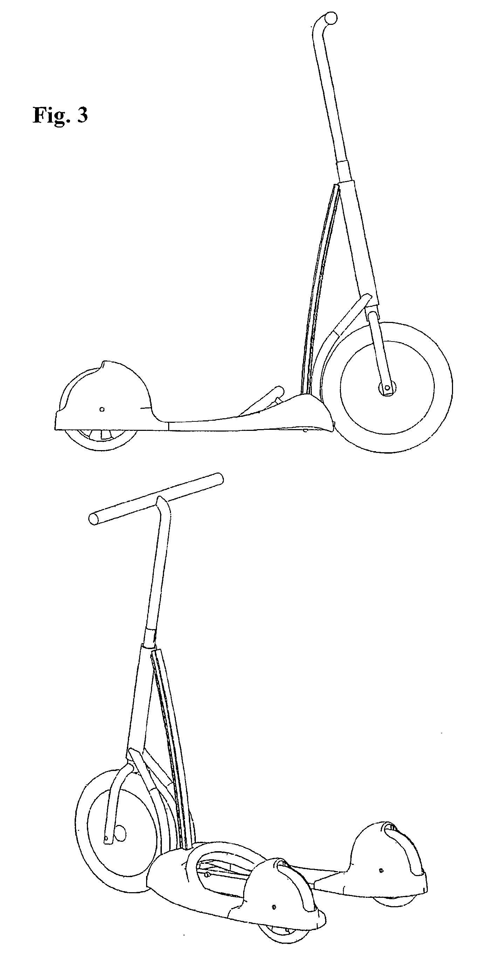

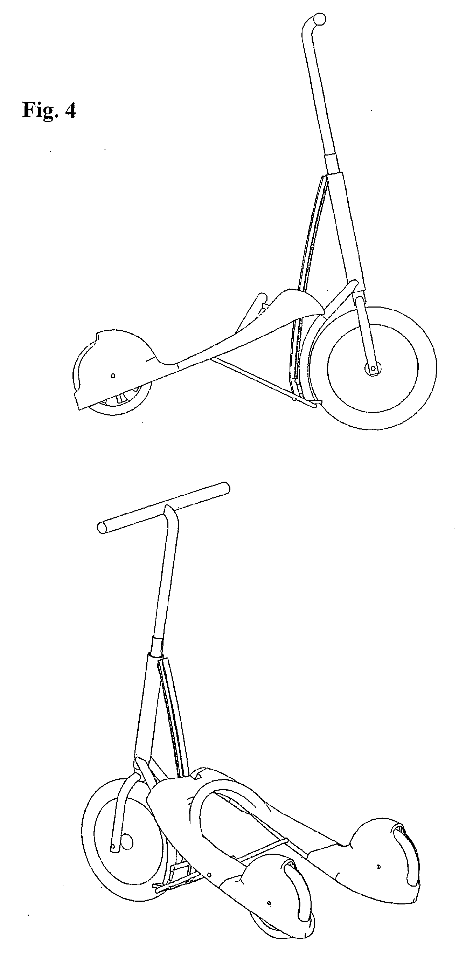

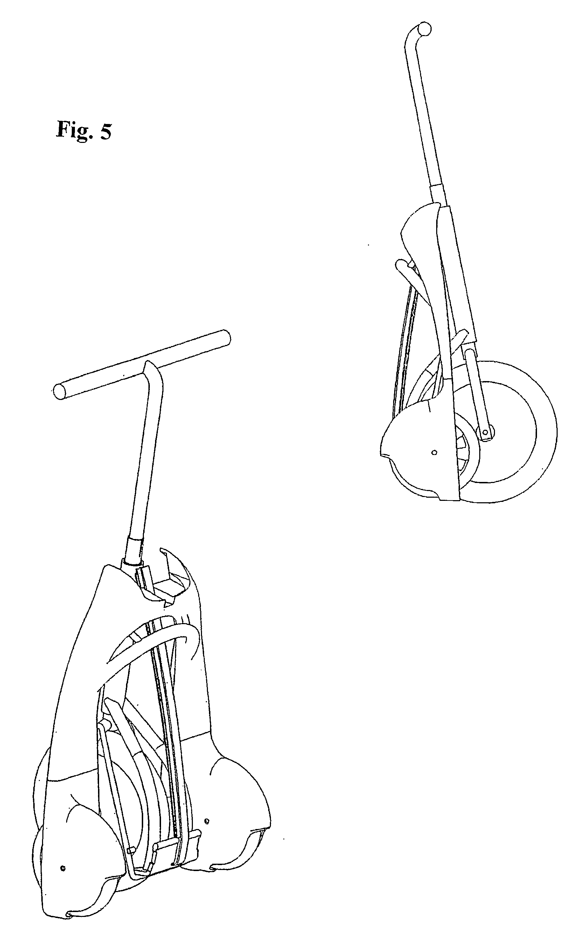

Figure 3-5 are perspective views with corresponding side views of the tricycle in three different positions, from a position for personal transportation to a collapsed position,
Figure 6a shows the front part of the tricycle in closer detail,
Figure 6b is an enlarged detail of the connections of the rigid stay,
Figure 7a shows the front part of the tricycle seen from the rear,
Figure 7b shows a section of the guide structure,
Figure 8 shows the rear carriage seen from the front,
Figure 9 is a perspective view of the front part of the rear carriage,
Figure 10 is a side view of the tricycle in a position for personal transportation with the forces acting on the structure indicated,

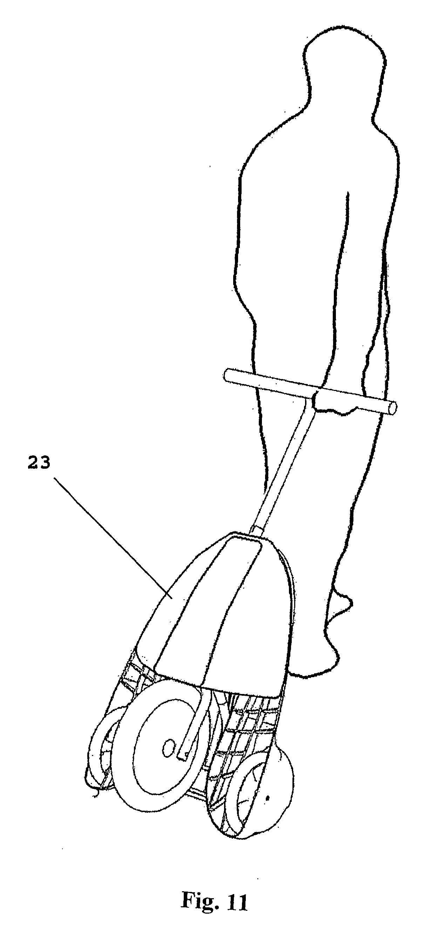

Figure 11 shows the tricycle in a folded position, utilized as a wheeled briefcase or the like,

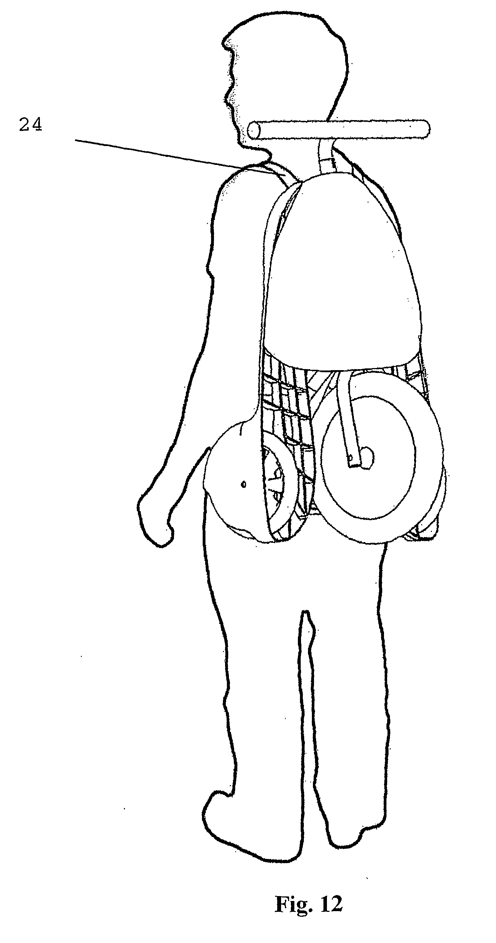

Figure 12 shows the vehicle carried as a backpack,

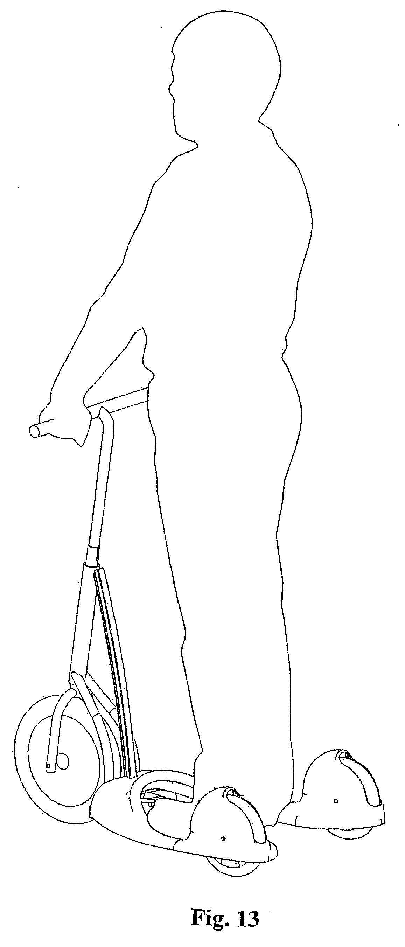

Figure 13 shows the vehicle utilized as a traditional scooter.

### Detailed description of the invention

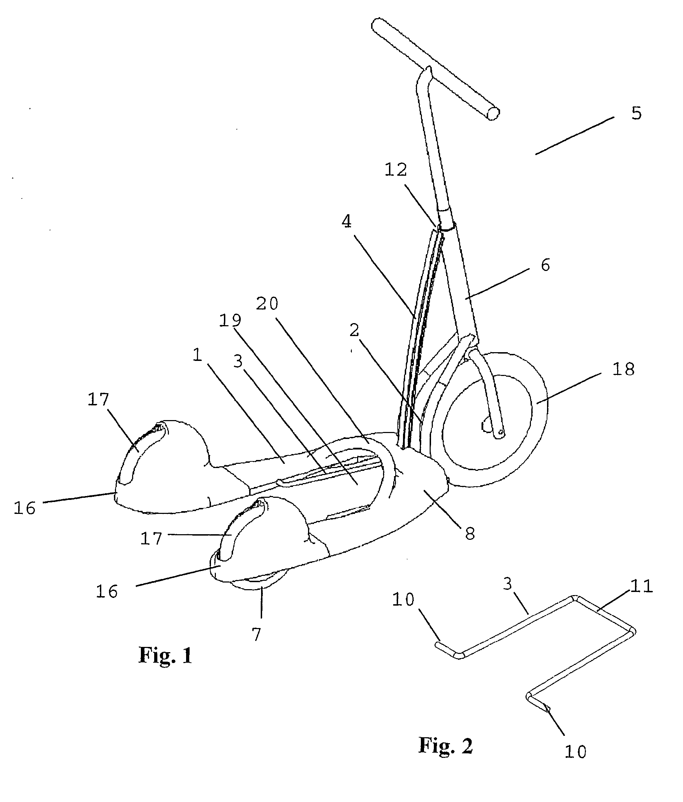

As shown in Figure 1, the invention relates to a tricycle 5, comprising a rear carriage 1, comprising at least one platform and at least one rear wheel 7, moveably arranged to a front part 2 via a rigid connection 3 and a stop face 9, a front part 2 comprising a support device 6 for a steerable front wheel 18, which support device 6 is provided with a guide structure 4 to facilitate folding of the tricycle. The front wheel might be turned through an angle of at least 180° and is fixed in a position in line or transverse to the rolling direction when the tricycle is folded. The rear carriage 1 is further provided with a handle 20 near the front of the platform, which enables folding of the tricycle by use of one hand.

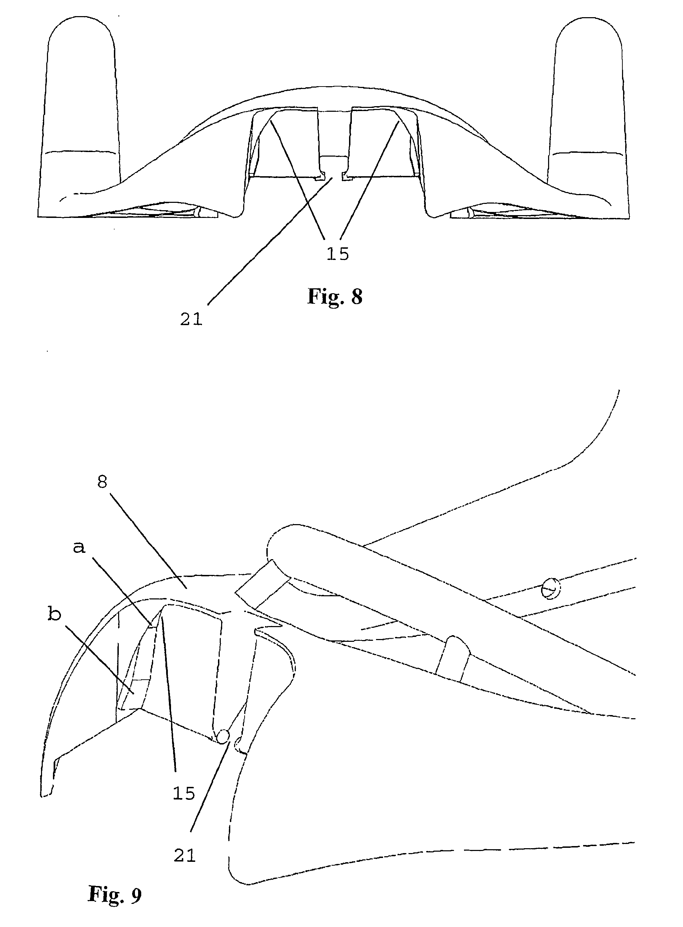

The rear carriage 1 is designed generally as a U with two wheels 7 arranged at the rear ends. The wheels are arranged to abut the ground surface in different positions dependent of the position of the rear carriage 1. This is evident in Figure 8. The rear portion 16 of the carriage 1 where the rear wheels are attached is designed to support the tricycle 5 in folded and upright position, which renders it immobile if left in said position. If the folded tricycle is tilted backwards, the rear wheels 7 will be brought in contact with the ground and it can be wheeled as a wheeled briefcase or the like. Due to the tricycle being tilted around a fixed point 16 on the rear carriage 1, this may be done by the use of one hand by applying a minimum moment of force.

The rear carriage 1 is connected to the front part of the tricycle via a rigid connection 3, which in the embodiment disclosed comprises a metal rod bent in the shape of an U with a straight stay 11 and an outward bent section 10 at each of the free ends of the U. The rigid connection 3 is pivotally arranged to a mid-section of the carriage 1 and to the lower part of the forward part 1, so that the carriage 1 can be folded towards the forward part 2 when the forward portion of the rear carriage 8 is lifted along the forward part.

Further, the rear carriage 1 is slidingly arranged in a guide 4, on the front part 2 of the tricycle, by two pegs 21 protruding towards each other engaging slots 22 in said guide 4. Generally, the guide is running from said stop face 9 to a position located higher on the support device and serves to guide the protruding part 8 of the carriage in respect to the support device 6 when the tricycle is collapsed or expanded.

The angle between the support device of the tricycle and the ground is sharp to provide an enhanced stability during steering and when the front wheel is in a transverse position.

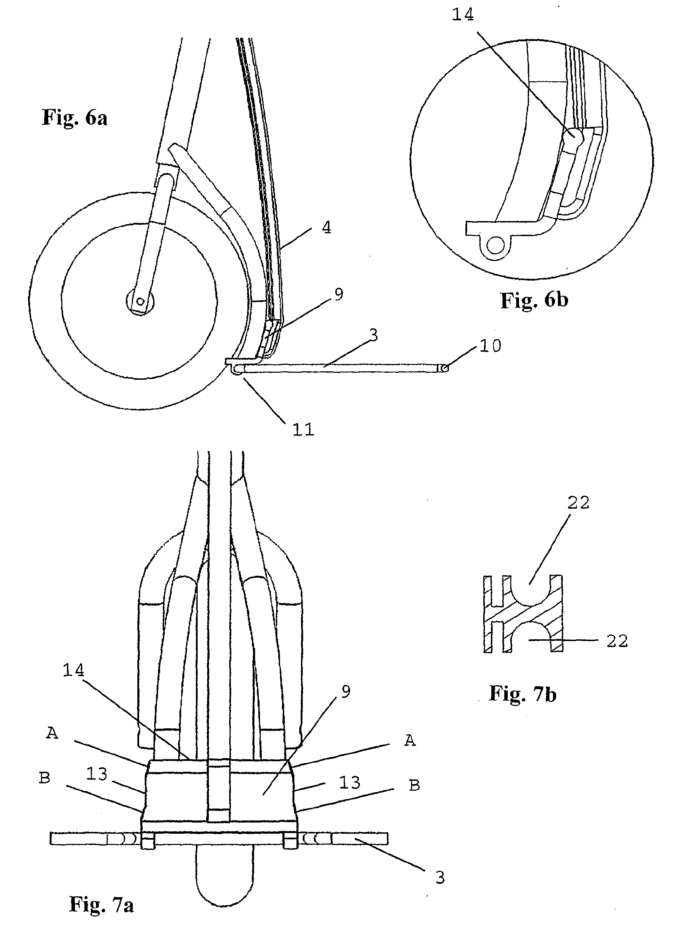

In the personal transport position, the front part of the carriage 1 abuts a stop face 9 on the forward part 2. The stop face 9 shown in figure 6 and 7 comprises an upper edge 14 and sloping edges A and B on the forward part 2; the front part 8 of the carriage 1 is resting by abutment of corresponding facing sloping edges a and b on the stop face 9. The sloping edges A and B on the stop face 9 has angles which exceed the angle of friction to avoid that the carriage and the forward part 2 get jammed.

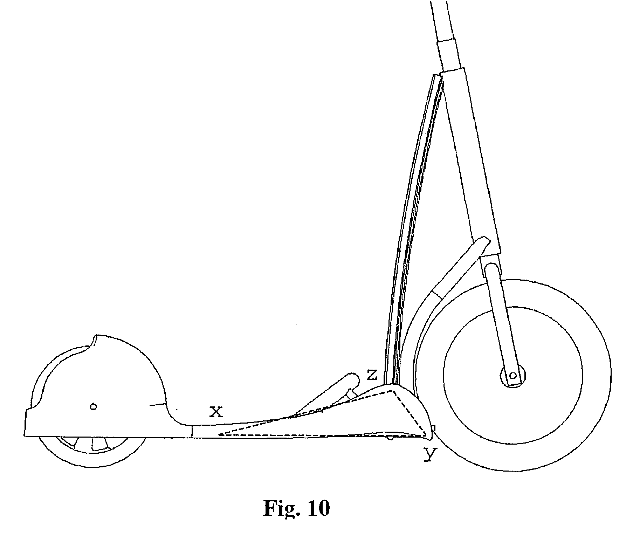

The contact points A-a and B-b forms a quadrangle which carry moment of force between the parts in the transversal plane. The open u-shaped area of the front portion 8 of the carriage is guided over a transversal edge area 14 formed at the upper part of the stop face 9 of the front portion. To ensure that the forces are transferred via the sloping edges A-a and B-b, the carriage 1 abuts the stop face 9 with a close fit in the horizontal direction and with a slight clearance vertically from the upper edge area 14. The upper edge area 14 is substantially carrying forces in the horizontal direction which are caused by opposite directed tensible forces in the rigid connection 3. Fig 10 shows the forces in a rigid triangle formed by the locating points x, y, z.

The support device may comprise compartment units 23, so that the tricycle forms a wheeled briefcase or the like in a collapsed position. Further the tricycle may be equipped with carrying straps 24 to carry it like a backpack or a bag.

The main parts of the vehicle are made of metal, plastic or other substantially rigid materials.

## Claims

1. A scooter (5) comprising a support device (6) for a steerable front wheel and a rear carriage (1) which is connected to the support device (6) at the front of the rear carriage (1), which rear carriage (1) is provided with at least one wheel (7) at the rear, wherein the rear carriage (1) may be folded against the support device (6) to a compact unit which may be carried or rolled, and wherein
the front of said rear carriage (1), in a utilizing position, abuts a stop face (9) connected to the support device (6), **characterized in that** a rigid stay (3) is arranged to the rear carriage (1), which rigid stay (3) is pivotally arranged at its first end (10) to a mid-section of the rear carriage (1) and is pivotally arranged at its second end (11) to the support device (6), so that when the scooter is collapsed the rear carriage will pivot around the first end of the rigid stay (3), so that the at least one rear wheel is swung towards the front wheel.

2. A scooter according to claim 1,
**characterized in that** the support device (6) comprises a guide (4) which is running substantially from said stop face (9) to a position (12) higher on the support device (6), which guide (4) is guiding the front portion of the rear carriage (1) in respect to the support device (6) when the rear carriage (1) is folded towards and from the support device (6).

3. A scooter according to claim 1 or 2,
**characterized in that** the carriage (1) comprises rear portions (16) protruding past the at least one rear wheel (7), which rear portions (16) serve as supporting points for the scooter when it is in a folded position.

4. A scooter according to claim 1 or 2,
**characterized in that** the stop face (9) comprises upward protruding edges (13), of which at least one sloping edge (A, B) interacting with a corresponding sloping edge (a, b) in the front portion (8) of the rear carriage (1), wherein the angle of the sloped faces to the vertical preferably exceeds the angle of friction between the materials in the interacting sloped faces.

5. A scooter according to claim 4,
**characterized in that** the stop face (9) comprises an upper edge area (14), which transfers substantially horizontal forces caused by tensible forces in said rigid stay (3) by abutment on a corresponding area (15) of the front portion of the rear carriage (1).

6. A scooter according to claim 3
**characterized in that** each of the at least one rear wheel (7) comprises a rear and upper exposed area (17) which will act as supporting member instead of said rear portions (16) of the rear carriage as the scooter is folded and tilted, hence the scooter can be wheeled on its at least one rear wheel.

7. A scooter according to any of the preceding claims,
**characterized in that** units of compartment are arranged on the support device, and are available both in an unfolded position, during use as a scooter, and in folded position, when it is used as a wheeled briefcase or the like.

8. A scooter according to any of the preceding claims,
**characterized in that** the front wheel can be turned through an angle of at least 180°.

9. A scooter according to any of the preceding claims,
**characterized in that** the axis of revolution of the at least one rear wheel is generally located above the platform of the rear carriage (1).

10. A scooter according to any of the preceding claims,
**characterized in that** the scooter may be equipped with carrying straps (24) to carry it like a backpack or a bag.

## Patentansprüche

1. Roller (5) umfassend eine Abstützeinheit (6) für ein steuerbares Vorderrad und ein rückseitiges Fahrwerk (1), welches an einer Vorderseite des rückseitigen Fahrwerks (1) mit der Abstützeinheit (6) verbunden ist, und welches an einer Heckseite des rückseitigen Fahrwerks (1) mit mindestens einem Rad (7) ausgestattet ist, wobei das rückseitige Fahrwerk (1) mit der Abstützeinheit (6) zu einer kompakten Einheit, welche rollbar oder tragbar ist, zusammenklappbar ist, und wobei die Vorderseite des rückseitigen Fahrwerks (1) in einer Gebrauchsposition an eine an der Abstützeinheit (6) befestigte Anlauffläche (9) anstößt, **dadurch gekennzeichnet, dass** eine unbiegsame Strebe (3) an dem rückseitigen Fahrwerk (1) angebracht ist, und die unbiegsame Strebe (3) an ihrem ersten Ende (10) drehbar an einem mittleren Abschnitt des rückseitigen Fahrwerks (1) angeordnet ist und an ihrem zweiten Ende (11) drehbar an der Abstützeinheit (6) angeordnet ist, so dass bei einem Umstürzen des Rollers (5) das rückseitige Fahrwerk (1) sich um das erste Ende (10) der unbiegsamen Strebe (3) dreht, so dass das mindestens eine Hinterrad (7) auf das Vorderrad zubewegt wird.

2. Roller (5) nach Anspruch 1, **dadurch gekennzeichnet, dass** die Abstützeinheit (6) eine Gleitleiste (4) umfasst, welche im Wesentlichen von der Anlauffläche (9) zu einer an der Abstützeinheit (6) höher gelegenen Position (12) verläuft, wobei nach einem Zusammen- und Auseinanderklappen des rückseitigen Fahrwerks (1) und der Abstützeinheit (6) die Gleitleiste (4) die Vorderseite des rückseitigen Fahrwerks (1) nach der Abstützeinheit (6) führt.

3. Roller (5) nach Anspruch 1 oder 2, **dadurch gekennzeichnet, dass** das rückseitige Fahrwerk (1) Heckteile (16) aufweist, welche hinter dem mindestens einen Hinterrad (7) hervorstehen, wobei die Heckteile (16) als Stützpunkte dienen, wenn der Roller (5) in einer zusammengeklappten Stellung ist.

4. Roller (5) nach Anspruch 1 oder 2, **dadurch gekennzeichnet, dass** die Anlauffläche (9) oben vorstehende Kanten (13) aufweist, von denen zumindest eine schräge Kante (A, B) mit einer entsprechenden schrägen Kante (a, b) der Vorderseite (8) des rückseitigen Fahrwerks (1) zusammenwirkt, wobei vorzugsweise der Winkel der schrägen Flächen zu der Vertikalen größer ist als der Winkel der inneren Reibung zwischen den Materialien in den zusammenwirkenden schrägen Flächen.

5. Roller (5) nach Anspruch 4, **dadurch gekennzeichnet, dass** die Anlauffläche (9) eine obere Kantenfläche (14) aufweist, welche von den Spannkräften innerhalb der unbiegsamen Strebe (3) erzeugte horizontale Kräfte durch ein Anstoßen an eine zusammenwirkende Fläche (15) der Vorderseite des rückseitigen Fahrwerks (1) im Wesentlichen überträgt.

6. Roller (5) nach Anspruch 3, **dadurch gekennzeichnet, dass** jedes der mindestens einen Hinterräder (7) rückseitig und oben eine unabgedeckte Fläche (17) aufweist, welche als Abstützelement statt der Heckteile (16) des rückseitigen Fahrwerks (1) dient, wenn der Roller (5) zusammengeklappt und gekippt ist, folglich der Roller (5) mittels seines mindestens einen Hinterrads (7) rollbar ist.

7. Roller (5) nach einem der vorhergehenden Ansprüche, **dadurch gekennzeichnet, dass** an der Abstützeinheit (6) Halterungen angeordnet sind, welche sowohl in der auseinandergeklappten Stellung während eines Verwendens als Roller (5), als auch in der zusammengeklappten Stellung, wenn der Roller (5) als rollbare Tasche oder Ähnliches genutzt wird, greifbar sind.

8. Roller (5) nach einem der vorhergehenden Ansprüche, **dadurch gekennzeichnet, dass** das Vorderrad um einen Winkel von mindestens 180° verstellbar ist.

9. Roller (5) nach einem der vorhergehenden Ansprüche, **dadurch gekennzeichnet, dass** die Drehachse des mindestens einen Hinterrads (7) sich im Wesentlichen oberhalb der Plattform des rückseitigen Fahrwerks (1) befindet.

10. Roller (5) nach einem der vorhergehenden Ansprüche, **dadurch gekennzeichnet, dass** der Roller (5) Tragegurte (24) zum Tragen des Rollers (5) als Rucksack oder Tasche aufweist.

## Revendications

1. Trottinette (5) comprenant un dispositif de support (6) destiné à une roue avant dirigeable et un chariot arrière (1) qui est relié au dispositif de support (6) au niveau de l'avant du chariot arrière (1), lequel chariot arrière (1) est doté d'au moins une roue (7) à l'arrière, dans laquelle le chariot arrière (1) peut être replié contre le dispositif de support (6) pour former une unité compacte qui peut être portée ou roulée, et dans laquelle l'avant dudit chariot arrière (1), dans une position d'utilisation, vient en butée contre une face d'arrêt (9) reliée au dispositif de support (6), **caractérisée en ce qu'**une base rigide (3) est agencée sur le chariot arrière (1), laquelle base rigide (3) étant agencée de manière pivotante au niveau de sa première extrémité (10) sur une section intermédiaire du chariot arrière (1) et étant agencée de manière pivotante au niveau de sa seconde extrémité (11) sur le dispositif de support (6), de sorte que, lorsque la trottinette est pliée, le chariot arrière pivote autour de la première extrémité de la base rigide (3), de sorte que la au moins une roue arrière bascule vers la roue avant.

2. Trottinette selon la revendication 1, **caractérisée en ce que** le dispositif de support (6) comprend un guide (4) qui se déplace sensiblement de ladite face d'arrêt (9) jusqu'à une position (12) plus élevée sur le dispositif de support (6), lequel guide (4) guide la partie avant du chariot arrière (1) par rapport au dispositif de support (6) lorsque le chariot arrière (1) est plié vers et depuis le dispositif de support (6).

3. Trottinette selon la revendication 1 ou 2, **caractérisée en ce que** le chariot (1) comprend des parties arrière (16) faisant saillie après la au moins une roue arrière (7), lesquelles parties arrière (16) servent de points de support pour la trottinette lorsqu'elle est dans une position pliée.

4. Trottinette selon la revendication 1 ou 2, **caractérisée en ce que** la face d'arrêt (9) comprend des bords faisant saillie vers le haut (13), dont au moins un bord incliné (A, B) interagit avec un bord incliné correspondant (a, b) dans la partie avant (8) du chariot arrière (1), dans lequel l'angle des faces inclinées par rapport à la verticale dépasse de préférence l'angle de frottement entre les matériaux dans les faces inclinées en interaction.

5. Trottinette selon la revendication 4, **caractérisée en ce que** la face d'arrêt (9) comprend une zone de bord supérieur (14), qui transfère des forces sensiblement horizontales causées par des forces de contraction dans ladite base rigide (3) par butée sur une zone correspondante (15) de la partie avant du chariot arrière (1).

6. Trottinette selon la revendication 3, **caractérisée en ce que** chacune des au moins une roues arrière (7) comprend une zone exposée arrière et supérieure (17) qui fonctionnera comme élément de support à la place desdites parties arrière (16) du chariot arrière lorsque la trottinette sera pliée et inclinée, donc la trottinette peut tourner sur ses roues arrière.

7. Trottinette selon l'une quelconque des revendications précédentes, **caractérisée en ce que** des unités de compartiment sont agencées sur le dispositif de support, et sont disponibles à la fois dans une position dépliée, pendant l'utilisation en tant que trottinette, et dans une position pliée, lorsqu'elle est utilisée comme mallette sur roues ou similaire.

8. Trottinette selon l'une quelconque des revendications précédentes, **caractérisée en ce que** la roue avant peut être tournée d'un angle d'au moins 180°.

9. Trottinette selon l'une quelconque des revendications précédentes, **caractérisée en ce que** l'axe de révolution de la au moins une roue arrière est globalement située au-dessus de la plate-forme du chariot arrière (1).

10. Trottinette selon l'une quelconque des revendications précédentes, **caractérisée en ce que** la trottinette peut être équipée de bretelles (24) pour la porter comme un sac à dos ou un sac.
